# EUROPÄISCHE PATENTSCHRIFT

(11) **EP 1 060 921 B1**
(45) Veröffentlichungstag und Bekanntmachung des Hinweises auf die Patenterteilung: **20.08.2003**
(21) Anmeldenummer: 00112279.5
(22) Anmeldetag: 08.06.2000
(51) Int. Cl.: B60J 7/047

(54) **Lamellendach für eine Dachöffnung eines Kraftfahrzeugs**
Panel roof for a roof opening of a vehicle
Toit à lamelles pour une ouverture de toit d'un véhicule

(30) Priorität: 17.06.1999 DE 19927654
(43) Veröffentlichungstag der Anmeldung: 20.12.2000
(73) Patentinhaber: CTS Fahrzeug-Dachsysteme GmbH, 21079 Hamburg (DE)
(72) Erfinder: Salz, Wolfram, 71665 Vaihingen/Enz (DE)
(74) Vertreter: Müller, Gottfried

(56) Entgegenhaltungen:
- WO-A-99/11479
- DE-C- 4 127 624
- DE-C- 19 529 702
- DE-C- 19 542 884
- DE-C- 19 608 916

## Beschreibung

Die Erfindung bezieht sich auf ein Lamellendach für eine Dachöffnung eines Kraftfahrzeuges gemäß dem Oberbegriff des Anspruches 1.

Lamellendächer der vorgenannten Art sind beispielsweise aus der DE 197 20 822 C1 bekannt und bestehen aus mehreren, quer zur Fahrtrichtung sich erstreckenden Lamellen, die bei geschlossenem Dach einen flächigen, geschlossenen Lamellenverbund bilden. Wird das Lamellendach geöffnet, so sind die Lamellen am bezogen auf die Fahrtrichtung rückwärtigen Ende der Dachöffnung zusammengefahren, und zwar einander teilweise schichtartig übergreifend und schräg nach hinten oben angestellt. Jeweils aufeinander folgende Lamellen sind im Bereich ihrer aneinander grenzenden, quer zur Fahrtrichtung verlaufenden Kanten mit einem gemeinsamen Führungsschlitten verbunden. Von diesen Lamellen ist die bezogen auf die Schließrichtung des Daches, und damit im Regelfall auch die Fahrtrichtung des Fahrzeuges rückwärtige Lamelle in ihrem vorderen Randbereich um eine zum Führungsschlitten feste Achse schwenkbar, während die bezogen auf die Schließrichtung vordere Lamelle in ihrem rückwärtigen Randbereich über eine Steuerwippe geführt ist, die ausstellbar ist und in ausgestellter Position das rückwärtige Lamellenende anhebt, unter Verschwenkung der Lamelle um die zugehörige Festachse, die dem bezogen auf die Schließrichtung davor liegenden Führungsschlitten zugeordnet ist. Ist die Lamelle über die aufgestellte Steuerwippe in Öffnungsrichtung verschoben, so überdeckt sie die dahinterliegende, entsprechend angestellte Lamelle.

Bei geschlossenem Dach ist bei der bekannten Lösung der jeweilige Lamellenträger gegen die ihn an seinem bezogen auf die Schließrichtung rückwärtigen Ende führende Steuerwippe abgestützt, und es ist der Steuerwippe als Sicherung und zusätzliches Sperrglied ein Sperriegel zugeordnet, der bei hammerförmiger Ausgestaltung im Bereich seines Stieles an der Steuerwippe gelagert ist und im Bereich seines Kopfes einerseits auf der Lagerkonsole des Führungsschlittens abgestützt ist, die die Schwenkachse für die Steuerwippe aufnimmt, und andererseits, bei geschlossener Lamelle, letztere im Anschlagbereich gegen die Steuerwippe übergreift.

Die Längsverschiebung des Lamellenverbandes in Öffnungsrichtung, mit dem Ausstellen der bezogen auf die Schließrichtung rückwärtigen Lamelle über eine gesonderte Ausstellführung, hat für die auf die rückwärtige Lamelle auflaufenden Lamellen ein Ausstellen zur Folge, wenn die in Ausstellrichtung druckund/oder federbelastete Steuerwippe jeweils ihre Führungsauflage gegenüber einer Führungsschiene durch Einrasten in eine schienenseitige Aufnahme verliert und der hammerförmige Sperriegel die Verschiebung freigibt. Dies als Folge dessen, daß der Sperriegel beim Verschwenken der Steuerwippe seine Lage gegenüber der Lagerkonsole als Führungsfläche und gegenüber dem die Steuerwippe abstützenden Ende des Lamellenträgers ändert und mit dem Einlaufen der Steuerwippe in ihre Endstellung als Funktionsstellung die Längsverschiebung in Richtung auf die in Öffnungsrichtung davor liegende, bereits ausgestellte Lamelle freigibt.

Schon bedingt durch die bei Lamellendächern für Kraftfahrzeuge gegebenen Raumverhältnisse ergibt sich für den hammerförmigen Sperriegel eine verhältnismäßig filigrane Konstruktion, die im Hinblick auf die angestrebten Funktionen eine hohe Bearbeitungsgenauigkeit auch im Verhältnis zu den zugeordneten Führungsflächen aufweisen muß, wobei zudem relativ hohe Kräfte sicher zu beherrschen sind. Die Vielzahl der Funktionsteile bringt zudem hohe Fertigungsanforderungen und die Gefahr größerer Toleranzen mit sich, wobei sich erschwerend auswirkt, daß das angestrebte sukzessive Ausstellen der Lamellen über die Zuordnung zu bestimmten Schienenpositionen, also zu zum jeweiligen Führungsschlitten unabhängigen Teilen erreicht wird, und auch für jede Lamelle unabhängig eingesteuert wird. Die Bindung an bestimmte Schienenpositionen schränkt zudem die Variationsmöglichkeiten eines Lamellendaches ein.

Eine gattungsgemäßes Lamellendach mit den Merkmales des Oberbegriffes von Anspruch 1 ist z.B. aus Dokument WO 99/11479 bekannt.

Der Erfindung liegt demgegenüber die Aufgabe zugrunde, eine Steuerung für eine Lamellendachkonstruktion zu schaffen, die fertigungstechnisch einfacher zu beherrschen ist, die die Variationsmöglichkeiten eines Lamellendaches nicht einschränkt und bei der trotz raumsparender Bauweise eine günstige Aufteilung der jeweiligen Funktionen in Bezug auf Öffnen und Schließen des Lamellendaches gegeben ist. Trotzdem soll aber eine sichere Verriegelung des Lamellendaches in den jeweils eingestellten Lagen gegeben sein.

Gemäß der Erfindung wird dies mit den kennzeichnenden Merkmalen des Anspruches 1 durch eine Zwangskopplung der Steuerwippe mit dem bezogen auf die Schließrichtung rückwärtigen Lamellenträger erreicht.

Weitere Einzelheiten und Merkmale der Erfindung ergeben sich aus den Unteransprüchen.

Dabei ist diese Zwangskopplung in Öffnungsrichtung des von der Steuerwippe geführten Lamellenträgers, bevorzugt aber in Öffnungs- und Schließrichtung sowie über den jeweils gesamten Schwenkweg vorgesehen. Hierzu ist bevorzugt eine Positionierung der einem Führungsschlitten zugeordneten Schwenkachse in der Weise vorgesehen, daß diese für die Steuerwippe der bezogen auf die Schließrichtung vorderen Lamelle und für den Lamellenträger der bezogen auf die Schließrichtung rückwärtigen Lamelle jeweils benachbart zur andern Lamelle liegen, so daß die der Steuerwippe zugeordnete, am Führungsschlitten vorgesehene Schwenkachse in Öffnungsrichtung des Daches gegenüber der dem gleichen Steuerschlitten zugeordneten Festschwenkachse des in Öffnungsrichtung nächstfolgenden, bezogen auf die Schließrichtung dahinter liegenden Lamellenträgers versetzt ist und sich ausgehend von den Schwenkachsen bei entgegengesetzten Erstrekkungsrichtungen eine Überlappung zwischen der Steuerwippe einerseits und dem Lamellenträger andererseits im Bereich zwischen deren am gleichen Führungsschlitten vorgesehenen Achsen ergibt. Hierdurch ergibt sich in besonders einfacher Weise die Möglichkeit, Schwenkbewegungen des um seine Festachse schwenkbaren, bezogen auf die Schließrichtung rückwärtigen Lamellenträgers beim Öffnen des Daches synchron in entsprechende Schwenkbewegungen der Steuerwippe umzusetzen, wobei es hierzu lediglich erforderlich ist, die Steuerwippe im Bereich zwischen den Schwenkachsen in Höhenrichtung gegen den überlappenden Lamellenträger abzustützen. Die entsprechende Abstützung läßt sich konstruktiv einfach gestalten, beispielsweise durch einen in einer Schlitzführung laufenden Stützbolzen, wobei über die Neigung der quer zur Schwenkachse der Steuerwippe verlaufenden Stützflächen und/oder den Abstand zu den jeweiligen Schwenkachsen jeweils gewünschte Übersetzungsverhältnisse konstruktiv in einfacher Weise bestimmt werden können.

In zweckmäßiger Weise läßt sich bei einer derartigen Grundausgestaltung auch die in Öffnungsrichtung drucksteife Abstützung des über die jeweilige Steuerwippe geführten Lamellenträgers dadurch realisieren, daß der Steuerwippe und dem Lamellenträger entsprechende Stützflächen zugeordnet werden. Bevorzugt liegen diese beiderseits des zur jeweiligen Lamellenebene bevorzugt senkrechten Steges des Lamellenträgers, wobei eine bezogen auf die Verschieberichtung gestaffelte Anordnung der beiderseits des Steges vorgesehenen Anschlagflächen zweckmäßig ist, um bei geringer Breite in Schwenkrichtung einen großen Winkelbereich abzudecken, in dem die drucksteife Abdeckung realisierbar ist.

In weiterer zweckmäßiger Ausgestaltung der Erfindung dient die Steuerwippe als Träger für ein durch zumindest einen Sperrhebel gebildetes Sperrelement, wobei der Sperrhebel bevorzugt im von der Achse der Steuerwippe abgelegenen Bereich derselben an dieser gelagert ist, so daß sich eine zur Steuerwippe gegenläufige, überlagerte Erstreckung ergibt. Zweckmäßigerweise ist der Sperrhebel in seinem zu seiner Schwenkachse benachbarten Bereich gegen eine Führungsbahn des von der Steuerwippe geführten Lamellenträgers abgestützt, die beispielsweise und bevorzugt durch die vom lamellenseitigen Rücken abgelegene Stirnseite des Steges des Lamellenträgers gebildet sein kann, so daß eine einfache Zuordnung dieser Führungsbahn zur Führungskulisse, die sich längs des Lamellenträgers erstreckt, möglich ist.

Über den Sperrhebel kann in entsprechender Steuerung die Verriegelung gegenüber dem jeweils nächstfolgenden Führungsschlitten oder auch gegenüber der Führungschiene erfolgen.

Die erfindungsgemäß ausgebildete Führungsmechanik gibt neben der Zwangskopplung der Schwenkbewegung des Lamellenträgers der bezogen auf die Schließrichtung rückwärtigen Lamelle mit der Steuerwippe bzw. mit dem Lamellenträger der über die Steuerwippe abgestützten, davor liegenden Lamelle unter Vermittlung der Steuerwippe die Möglichkeit der drucksteifen Abstützung dieses Lamellenträgers gegen die Steuerwippe. Entsprechend der Kopplung der Steuerwippe mit dem rückwärtigen Lamellenträger sowie der Verschiebung unter gleichzeitiger Verschwenkung desselben durch die über die Steuerwippe auf den gemeinsamen Lamellenträger eingeleiteten Druckkraft läßt sich eng toleriert das Erreichen der Endstellung der rückwärtigen Lamelle mit der Auflösung der Druckabstützung koordinieren. Zusätzlich kann es aber zweckmäßig sein, den Sperrhebel als zusätzliches Stützelement zu nutzen, indem der Sperrhebel in dieser Phase in Druckrichtung in Überdeckung zu einem Teil des Lamellenträgers angeordnet ist. Wird die Überdeckung, die bevorzugt zur endseitigen Stirnseite des Lamellenträgers gegeben ist, erst aufgegeben nach der Abstützung des Lamellenträgers gegen die Steuerwippe, oder gleichzeitig hierzu, so sind die dort gegebenen, raumbedingt vergleichsweise kleinen und dadurch hoch belasteten Stützflächen entlastet. Diese Entlastung läßt sich erfindungsgemäß über den Sperrhebel zudem unabhängig steuern, wobei eine diesbezüglich vorteilhafte Lösung darin besteht, dem Sperrhebel eine überfahrbare Stützfläche zuzuordnen, die endseitig ein Abfallen des Sperrhebels ermöglicht, wenn die Entlastung beendet werden soll. Die überfahrbare Stützfläche ist hierzu bevorzugt an dem bezogen auf die Schließrichtung rückwärtig folgenden Führungsschlitten vorgesehen und durch eine Auflagefläche gebildet, auf die der Sperrhebel während der Verschiebung des Führungsschlittens, auf dem die den Sperrhebel tragende Steuerwippe gelagert ist, zur Auflage kommt. Diese Auflagefläche ist so zu gestalten, daß der Sperrhebel abfällt und die Abstützung beendet, wenn der über die zugehörige Steuerwippe getragene Lamellenträger freizugeben ist. Der Sperrhebel kann bevorzugt gleichzeitig genutzt werden, um den auflaufenden Führungsschlitten mit dem nachfolgenden Führungsschlitten zu koppeln.

Nachfolgend wird ein Ausführungsbeispiel der Erfindung mit weiteren wesentlichen Einzelheiten anhand der Zeichnungen näher beschrieben. Es zeigen:
- Figur 1: eine schematisierte Darstellung des Lamellenverbundes eines Lamellendaches, über das bei geschlossenen Lamellen eine Dachöffnung abgedeckt ist, wobei die Lamellen beiderseits der Dachöffnung über im Bereich der Lamellenenden vorgesehene, nicht weiter dargestellte dachfeste Führungsschienen als Teile einer Führungsmechanik geführt sind; die Dachkontur und die Führungsschienen sind nur angedeutet und der Lamellenverbund, der symmetrisch zur in Verschieberichtung des Lamellendaches verlaufenden Längsmittelebene aufgebaut ist, ist in einer Seitenansicht gezeigt,
- Figur 2: eine der Figur 1 entsprechende Darstellung bei leicht geöffnetem Lamellendach, wobei die bezogen auf Fahrtund Schließrichtung rückwärtige Lamelle ihre schräg nach hinten oben ausgestellte anschlaggesicherte Endstellung, geschoben durch den drucksteifen Verband der davor liegenden Lamellen, erreicht hat und die nächstfolgenden Lamellen in entsprechender Richtung leicht ausgestellt und geöffnet sind,
- Figur 3: die vergrößerte Ausschnittsdarstellung des Bereiches III in Figur 2,
- Figur 4: eine der Figur 1 entsprechende Darstellung in der Verschiebephase der nächstfolgenden Lamelle,
- Figur 5: die vergrößerte Ausschnittsdarstellung des Bereiches V in Figur 4,
- Figur 6: eine weitere der Figur 1 entsprechende Darstellung, bei der das Lamellendach gegenüber der Stellung gemäß Figur IV weiter geöffnet ist und die auf die rückwärtige Lamelle folgende Lamelle ihre volle Öffnungsstellung erreicht hat und die Verschiebung der nächstfolgenden Lamelle beginnt,
- Figur 7: die Ausschnittsvergrößerung des Bereiches VII in Figur 6,
- Figur 8: eine der Figur 1 entsprechende Darstellung des Lamellendaches in einer vollen Öffnungsstellung, wobei die Verrastung des der rückwärtigen Lamelle zugeordneten Führungsschlittens mit dem der mittleren Lamelle zugeordneten Führungsschlitten gezeigt ist, auf die Darstellung des den in Schließrichtung vordersten Führungsschlittens beaufschlagenden Stellantriebes aber verzichtet ist,
- Figur 9: eine perspektivische Darstellung eines Teils der Führungsmechanik, wobei die den Führungsschlitten der Führungsmechanik aufnehmende Führungsschiene nicht gezeigt ist und eine Stellung zweier aufeinander folgender Lamellen angenommen ist, die etwa der in Figur 7 gezeigten entspricht, und
- Figur 10: die Führungsmechanik ohne Führungsschiene in Draufsicht.

Die nachfolgende Zeichnungsbeschreibung geht von einem in seinem Grundaufbau bekannten Lamellendach für eine Dachöffnung eines Kraftfahrzeuges aus. Die Darstellung der erfindungsgemäßen Lösung beschränkt sich daher im wesentlichen auf die Darstellung der Führungsmechanik für die Lamellen, die an beiden Lamellenenden im Übergang zum dachseitigen Fahrzeugaufbau vorgesehen ist, und die, bezogen auf die Anordnung an den beiden Lamellenenden, spiegelsymmetrisch zu einer sich in Verschieberichtung des Lamellendaches erstreckenden Ebene gestaltet ist.

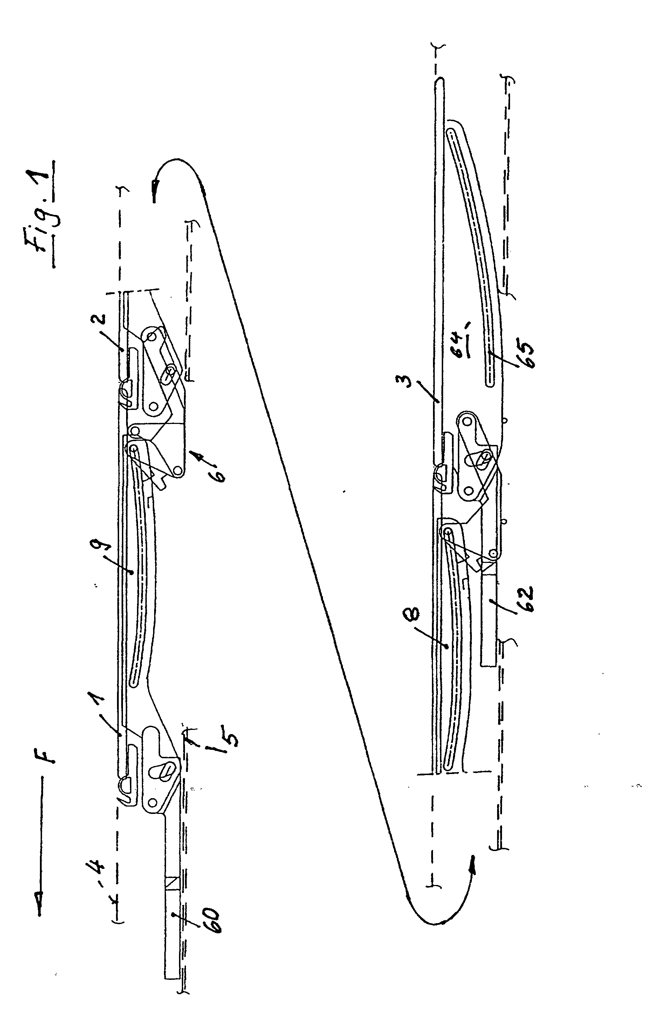

In der Darstellung gemäß Figur 1 ist ein Lamellenverbund eines Lamellendaches in seiner die nicht gezeigte Dachöffnung abdekkenden Schließstellung gezeigt, wobei der Lamellenverbund im Ausführungsbeispiel aus drei Lamellen besteht, zu einem Verbund mit einer größeren Anzahl von Lamellen aber jederzeit ergänzt werden kann. Die einzelnen Lamellen sind mit 1 bis 3 bezeichnet, wobei bezogen auf die dargestellte Schließlage die in Schließrichtung, die im Ausführungsbeispiel der Fahrtrichtung F entspricht, vorderste Lamelle das Bezugszeichen 1 trägt, die mittlere Lamelle das Bezugszeichen 2 und die rückwärtige Lamelle das Bezugszeichen 3. In der dargestellten Schließlage liegen die Lamellen 1 bis 3 mit ihrer Oberseite etwa bündig zur Dachkontur 4, die strichliert angedeutet ist, und sie sind über ent sprechende Führungsmechaniken in beiderseits der Dachöffnung liegenden, endseitig zu den Lamellen angeordneten, dachfesten Führungsschienen 5 geführt, wie sie in Figur 1 schematisiert durch eine doppelte Strichlinie angedeutet sind.

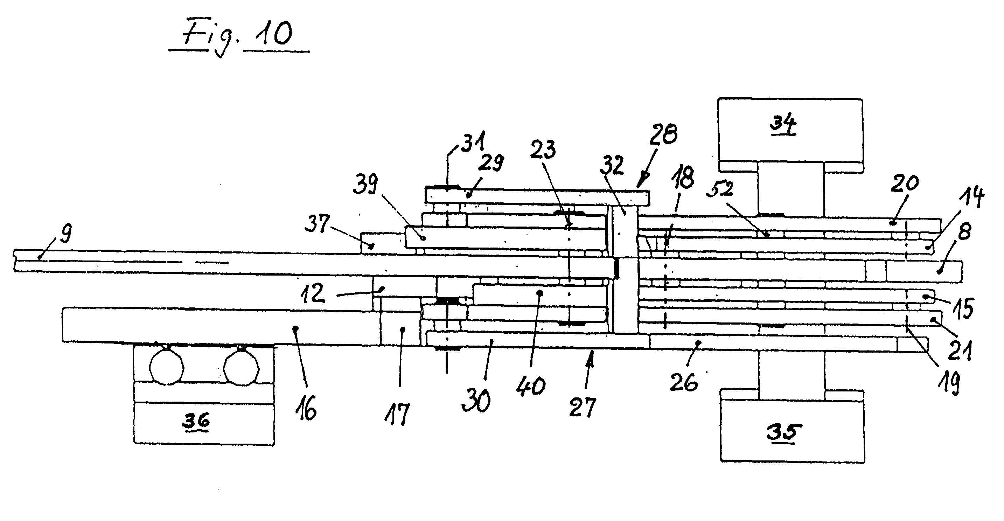

Von den Führungsmechaniken ist die zwischen den Lamellen 1 und 2 liegende mit 6 bezeichnet. Eine solche Führungsmechanik 6 umfaßt, wie aus Figuren 9 und 10 insbesondere ersichtlich, neben der dort nicht gezeigten Führungsschiene einen Führungsschlitten 7, auf dem zwei aufeinander folgende Lamellen über ihre Lamellenträger 8 und 9 abgestützt sind, wobei hier nur die Lamellenträger 8 und 9 gezeigt sind, nicht aber die auf dem Rücken 10 der Lamellenträger 8 und 9 jeweils getragenen Lamellen. Ausgehend von einer angenommenen Schließrichtung F ist der Lamellenträger 8 einer rückwärtigen Lamelle zugeordnet, die beim Öffnen des Lamellenverbundes zunächst angestellt wird, und der Lamellenträger 9 einer bezogen auf die Schließrichtung F davor liegenden Lamelle. Der rückwärtige Lamellenträger 8 wäre bei einem Lamellenverbund mit mehreren zwischen den endseitigen Lamellen liegenden Lamellen, analog zum Lamellenträger 9, ebenfalls auf einem Führungsschlitten abgestützt, wobei in Figur 9 der diesbezügliche Führungsschlitten zwar dargestellt und mit 11 bezeichnet ist, die Darstellung aber ohne die zwischen dem Führungsschlitten 11 und dem Lamellenträger 8 liegenden Teile der Führungsmechanik erfolgt ist, so daß bezüglich der Führungsschlitten 7 und 11 nur deren Lage zueinander bei voll ausgestelltem Lamellenträger 8 veranschaulicht ist. Dadurch ist der Schlittenaufbau anhand des Führungsschlittens 11 besser zu erkennen, und es ist ersichtlich, daß der Schlitten 11 einen Zentralkörper 12 aufweist, der in seinem rückwärtigen Endbereich eine gegabelte Konsole 13 mit Gabelarmen 14 und 15 trägt und der in Gegenrichtung seitlich versetzt zum Zentralkörper 12 mit einem Ausleger 16 versehen ist, der sich in Schließrichtung erstreckt und der bei aufeinander gefahrenen Führungsschlitten in seitlicher Überdeckung zum nächstfolgenden Führungsschlitten 7 liegt. Bei identischem Aufbau der Führungsschlitten 11 und 7 weist letzterer ebenfalls einen Ausleger 16 auf, wobei die Ausleger 16 in ihrer Länge im Verhältnis zueinander und zur Länge des Zentralkörpers 12 derart bemessen sind, daß sich bei aneinandergefahrenen Schlitten 7 und 11 zwischen den Auslegern 16 eine Eingriffsöffnung 17 ergibt. Die diese begrenzenden Stirnseiten der Ausleger 16 sind mit 50 und 51 bezeichnet und derart angeschrägt und entgegengesetzt geneigt, daß die Eingriffsöffnung 17 sich gegen die Auflagefläche der Ausleger 16 aufweitet. Durch die Anschrägung bilden die Stirnseite 51 eine Auffahrschräge.

Die Führungsschlitten tragen, wie für den Führungsschlitten 11 ersichtlich, im Bereich ihrer gegabelten, erhabenen Konsole 13 an deren bezogen auf die Schließrichtung F einander gegenüberliegenden Endbereichen Schwenkachsen 18 und 19, von denen die Schwenkachse 18 dem bezogen auf die Schließrichtung F vorderen Endbereich der Konsole 11 zugeordnet ist und als schlittenfeste Drehachse für einen dem Lamellenträger 8 entsprechenden Lamellenträger dient. Dieser käme zwischen den Gabelarmen 14 und 15 zu liegen, bei der Schließlage der Lamelle entsprechender Lage teilweise zwischen die Gabelarme 14 und 15 eintauchend. Auf der Schwenkachse 19 ist mit der Konsole 13 eine einer Steuerwippe 22 entsprechende Steuerwippe zu lagern. Die Arme der Steuerwippe 22 sind mit 20 und 21 bezeichnet und im in Bezug auf die Schließrichtung vor der Konsole 13 liegenden Bereich über eine Querbrücke verbunden sind. Die Arme 20 und 21 der Steuerwippe 22 erstrecken sich, wie Figur 10 zeigt, bis in den vorderen Bereich des Führungsschlittens, wie für den Führungsschlitten 7 erkennbar, und sie tragen in diesem Bereich einen Führungszapfen 23, der, wie für den Lamellenträger 9 in Figur 9 gezeigt, diesen im Bereich einer Führungskulisse 24 durchsetzt, die sich bei schwacher Wölbung in Längsrichtung des Lamellenträgers 9 erstreckt. Für den Lamellenträger 8 ist eine entsprechende Führungskulisse 25 angedeutet, wobei die Lamellenträger und die Führungsmechaniken für zwischen den endseitigen Lamellen liegende Lamellen eines Lamellenverbundes gleich ausgebildet sind.

Die Steuerwippe 22 ist Träger eines einen Sperrhebel 26 umfassenden Sperrelementes 27. Das Sperrelement 27 umfaßt als Träger des Sperrhebels 26 einen in der Draufsicht U-förmigen Bügel 28, dessen Arme mit 29 und 30 bezeichnet sind und im bezogen auf die Schließrichtung F vordersten Endbereich der in Seitenansicht winkelförmigen Steuerwippe 22 an deren Armen 20 und 21 gelagert sind. Die diesbezügliche Schwenkachse ist mit 31 bezeichnet, und die Arme 29 und 30 sind über einen Steg 32 verbunden, dem am jeweils zugehörigen Lamellenträger, hier am Lamellenträger 9 eine Fuhrung zugeordnet ist, die durch die dem Rücken 10 gegenüber liegende Schmalseite als Führungsbahn 33 und die Stirnseite 56 des Lamellenträgers 9 gebildet ist. In der Verlängerung des winkelförmigen Armes 30, der auf dem einen Schenkel den Steg 32 trägt und mit dem anderen Schenkel in den Sperrhebel 26 übergeht, über den Steg 32 hinaus liegt der Sperrhebel 26 des Sperrelementes 27, der in seiner Verriegelungslage in die Eingriffsöffnung 17 zwischen aufeinanderfolgende Ausleger 16 eingreift, wobei der dem in Schließrichtung jeweils vorderen Schlitten 7 zugehörige Sperrhebel 26 den Ausleger 16 des bezogen auf die Schließrichtung nächstfolgenden, rückwärtigen Führungsschlitten 16 jeweils hintergreift, so daß die Führungsschlitten miteinander gekoppelt sind. Eine entsprechende Festlegung der Führungsschlitten ließe sich im Rahmen der Erfindung, was aber nicht dargestellt ist, auch dadurch erreichen, daß der Sperrhebel jeweils in eine entsprechende Öffnung der Führungsschiene eingreift, oder einen entsprechenden Ansatz hintergreift.

Figur 10 zeigt desweiteren noch dem jeweiligen Führungsschlitten, hier dem Führungsschlitten 7, zugeordnete Führungskörper 34 bis 36, die durch Gleitsteine oder dergleichen gebildet sein können und von denen die Führungskörper 34 und 35 einander gegenüberliegend im bezogen auf die Schließrichtung rückwärtigen Endbereich, also etwa im Bereich der Konsole 13 angeordnet sind, während der Führungskörper 36 im Bereich des Auslegers 16 angeordnet ist.

Beim Öffnen und Schließen von Lamellendächern können die einzelnen Lamellen zwar unabhängig voneinander angetrieben sein, dies bedeutet jedoch einen erheblichen Aufwand. Deshalb erfolgt üblicherweise der Antrieb ausgehend von einem Ende, gegebenenfalls auch von beiden Enden des Lamellendaches. Geht man bezogen auf die vorliegende Lamellendachkonstruktion davon aus, daß zum Schließen des Lamellendaches auf die in Schließrichtung vorderste Lamelle bzw. deren Führungseinrichtung eine Zugkraft ausgeübt wird, die über die jeweiligen Lamellen und die diesen zugeordneten Lamellenträger unter Vermittlung der entsprechenden Führungsmechaniken übertragen wird, so ist eine wesentliche Forderung, daß die Betätigungskräfte möglichst gering gehalten werden können. Dies gilt insbesondere auch für das Öffnen des Lamellendaches, bei dem über die bezogen auf die Schließrichtung vorderste Lamelle bzw. deren Führungseinrichtungen entsprechende Druckkräfte eingeleitet werden, die eine Verschiebung des Lamellenverbundes mit Aufstellen der Lamellen ausgehend von der bezogen auf die Schließrichtung rückwärtigen Lamelle bedingen.

Die Übertragung der Druckkräfte bedingt entsprechende Abstützungen, wobei diese erfindungsgemäß, wie insbesondere auch aus Figuren 9 und 10 ersichtlich, über Stützkörper 37 bis 40 gebildet werden, von denen die Stützkörper 37 und 38 gegenüberliegenden Seiten des Lamellenträgers 9 zugeordnet sind und sich in entsprechenden Schwenklagen der Steuerwippe 22 mit Stützkörpern 39 und 40 überdecken, die den Armen 20 und 21 der Steuerwippe 22 in deren Überdeckungsbereich zum Lamellenträger 9 zugeordnet sind und die zwischen den Armen 20 und 21 und dem Lamellenträger 9 liegen. Die Stützkörper 37 und 38 sind dabei bevorzugt in dem zwischen der Führungsbahn 33 und der Führungskulisse 24 liegenden Stegbereich 41 des Lamellenträgers 9 vorgesehen, wobei in weiterer Ausgestaltung bevorzugt auch die Anschlagflächen zwischen den Stützkörpern 37 und 39 einerseits und den Stützkörpern 38 und 40 andererseits in verschiedenem radialen Abstand zum Führungszapfen 23 liegen, der die Führungskulisse 24 durchsetzt und der in den Armen 20 und 21 der Steuerwippe 22 gehalten ist. Hierdurch läßt sich bei nur schmalen Auflageflächen, wie sie aus Raumgründen in Schwenkrichtung nur möglich sind, ein ausreichender Überdeckungsgrad verwirklichen.

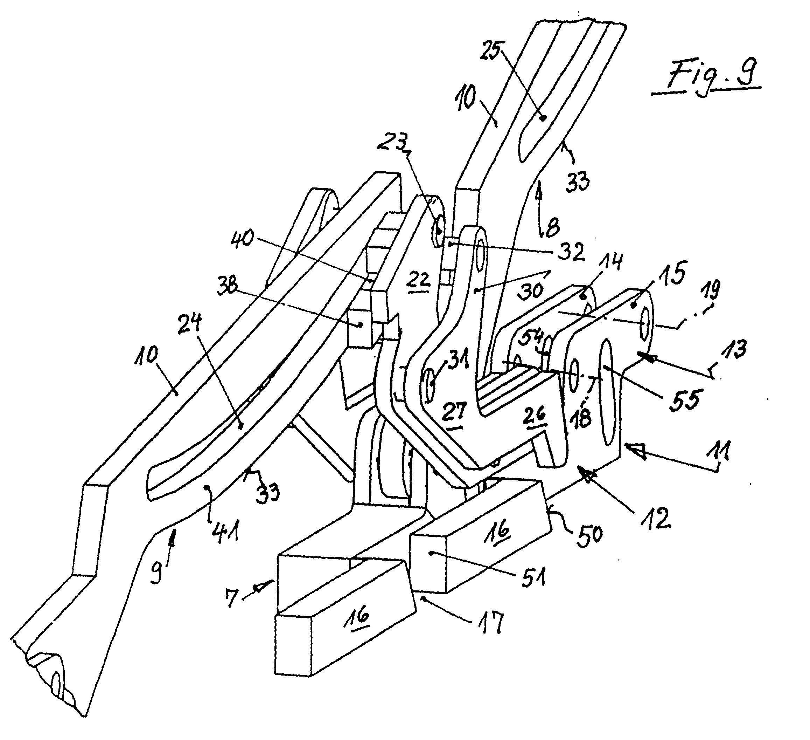

Die wechselseitigen Anlageflächen der Stützkörper sind in Figur 8 bezogen auf die in Schließrichtung vorderen Lamellen des Lamellenverbundes dargestellt und für die am Lamellenträger vorgesehenen Stützkörper 37 und 38 mit 42 und 43 bezeichnet, während die der Steuerwippe 22 zugeordneten Stützkörper 39 und 40 Anlageflächen 44 bzw. 45 auf weisen. Die Stützkörper 37 bzw. 38 sind bevorzugt auch in Schwenkrichtung der Steuerwippe 22 gegenüber dem Lamellenträger 9 gestaffelt, so daß sich, mit den beiderseits des Lamellenträgers 9 liegenden, durch die Stützkörper 37 bis 40 und deren Anschlagflächen 42 bis 45 gebildeten Anschlagpaarungen unterschiedliche, aber in der Sperrstellung überlappende Eingriffsbereiche verwirklichen lassen.

In Figur 9 sind lediglich die der Sichtseite zugewandten Stützkörper 38 und 40 teilweise sichtbar.

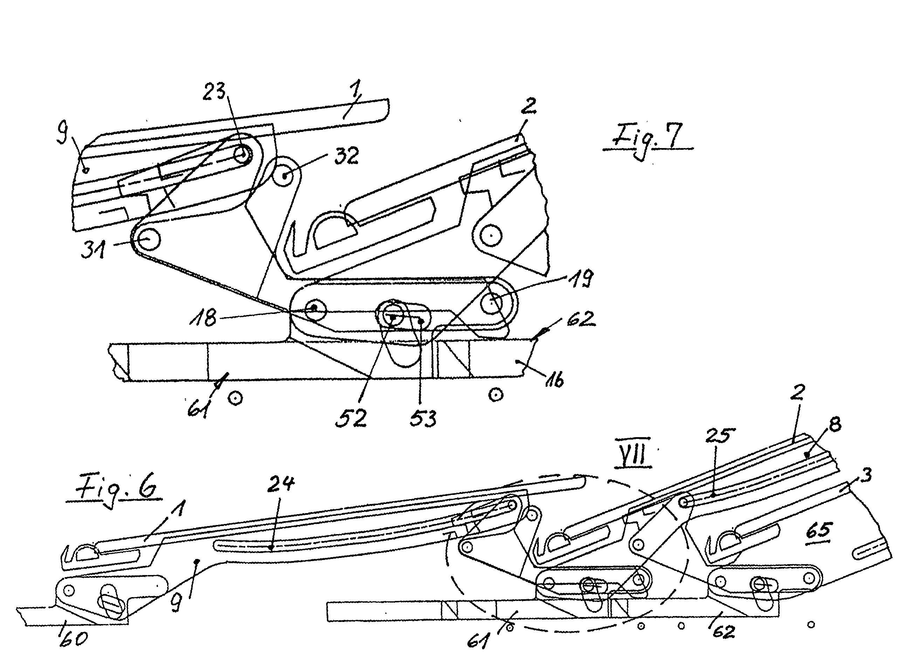

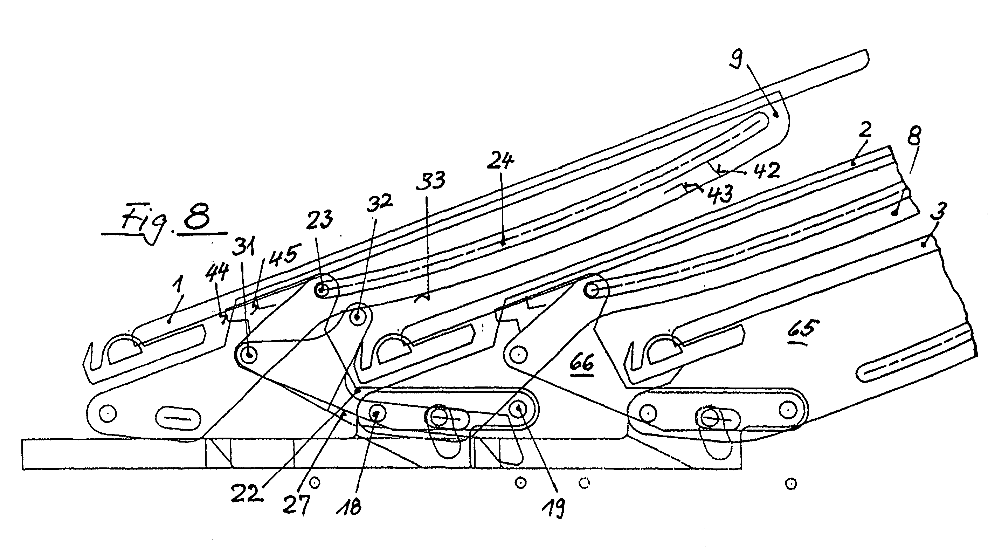

Die Koppelung des Lamellenträgers 8 mit den Armen 20 und 21 der Steuerwippe 22 erfolgt bevorzugt über einen Tragzapfen 52, der in den Armen 20 und 21 der Steuerwippe 22 über entsprechende Aufnahmebohrungen fixiert ist und der den Lamellenträger 8 in einer Langlochführung 53 (z.B. in Figur 7) durchsetzt, so daß Schwenkbewegungen des Lamellenträgers 8 in Schwenkbewegungen der Steuerwippe 22 umgesetzt werden, wobei die Langlochführung 53 den durch den Versatz der Schwenkachsen 18 und 19 bedingten Längsversatz des Tragzapfens 52 gegenüber dem Lamellenträger 8 ermöglicht. Durch die Wahl des Abstandes des Tragzapfens 52 zu den Schwenkachsen 18 und 19 sowie die Neigung des Langloches 53, das sich im wesentlichen in Richtung einer die Schwenkachsen 18 und 19 verbindenden Geraden erstreckt, kann das Übersetzungsverhältnis bezüglich der wechselseitigen Schwenkbewegungen bestimmt werden. In Überlappung zur Langlochführung 53 sind in den Gabelarmen 14 und 15 entsprechende langlochförmige Aussparungen 54 und 55 vorgesehen, die den notwendigen Freigang gegenüber der Konsole 13 gewährleisten.

Die Figuren 1 bis 8 veranschaulichen die Arbeitsweise der Führungsmechanik in Verbindung mit einem Lamellendach, dessen Lamellenverbund aus drei Lamellen 1 bis 3 besteht, von denen die Lamelle 1 die bezogen auf die Schließrichtung F, die im Ausführungsbeispiel der Fahrtrichtung entspricht, vorderste Lamelle ist. In Figur 1 sind die Lamellen 1 bis 3 und die ihnen zugeordneten Führungseinrichtungen in der der Schließlage des Daches entsprechenden Stellung gezeigt, wobei die Oberseite der Lamellen 1 bis 3 in etwa mit der Dachkontur 4 zusammenfällt. Die über das Lamellendach abdeckbare Dachöffnung weist seitlich Führungsschienen auf, die bei 5 durch eine doppelte Strichlinie angedeutet sind und in denen die Führungsschlitten 60, 61 und 62 laufen, die den anhand der Figur 9 und 10 erläuterten Führungsschlitten 7 und 11 entsprechen und die den Lamellen 1 bis 3 zugeordnet sind. Ungeachtet dessen, daß lediglich im Verbindungs- und Abstützbereich zwischen den Lamellen 1 und 2 eine vollständige Führungsmechanik 6, wie sie anhand der Figuren 9 und 10 erläutert wurden, eingesetzt ist, sind die Führungsschlitten 60 bis 62 bevorzugt Gleichteile, wobei in Figur 1 der mittlere Führungsschlitten nicht dargestellt ist. Steuerwippen 22 gemäß Figuren 9 und 10 finden in der Anlenkung der Lamelle 1 gegenüber dem Führungsschlitten 61 und in der Anlenkung der Lamelle 2 gegenüber dem Führungsschlitten 62 Verwendung. Eine Verrastung aufeinander folgender Führungsschlitten 61 und 62 über den Sperrhebel 26 des Sperrelementes 27 wird lediglich zwischen den Führungsschlitten 61 und 62 vorgenommen, weil am Führungsschlitten 60 der Antrieb ansetzt, der nicht weiter gezeigt ist und der beim Öffnen des Daches als Druckantrieb und beim Schließen des Daches als Zugantrieb wirkt. Die Übertragung der Zug- bzw. Druckkräfte erfolgt, soweit die Führungsschlitten 61 bis 63 nicht unmittelbar gekoppelt sind, was jeweils voll ausgestellte Lamellen voraussetzt, unter Vermittlung der die Lamellen tragenden Lamellenträger.

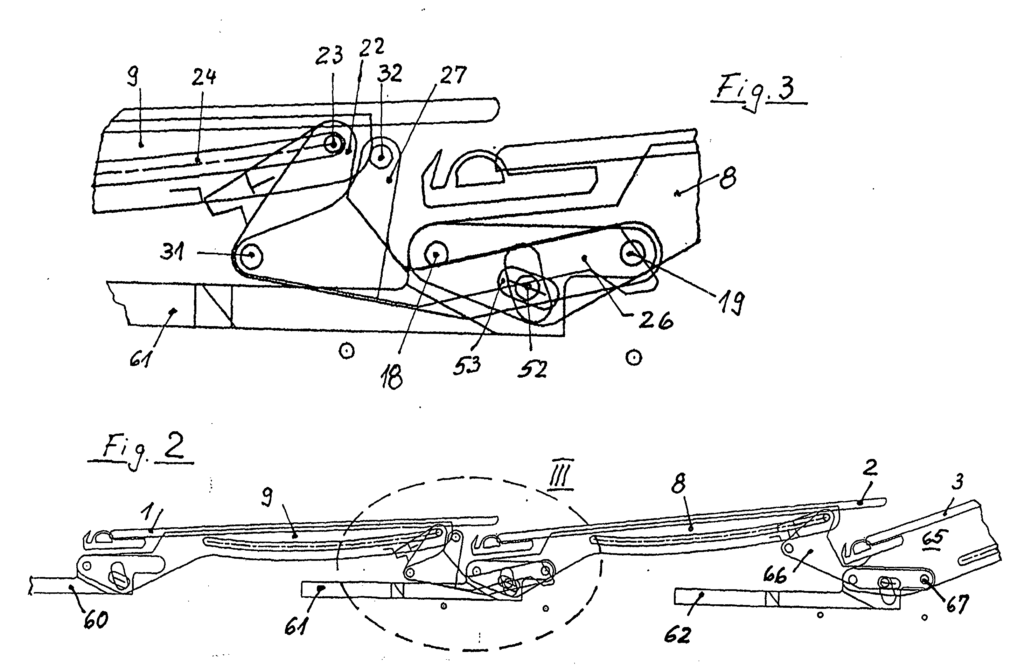

Wird der Öffnungsvorgang durch Einleiten einer Druckkraft P am bezogen auf das geschlossene Dach vordersten Führungsschlittens 60 begonnen, so ist zunächst ein drucksteifer Verbund gegeben, und der bezogen auf die Schließrichtung F des Lamellendaches rückwärtige Führungsschlitten 62 wird in Richtung auf eine rückwärtige Anschlagstellung verschoben, unter gleichzeitiger Ausstellung der rückwärtigen Lamelle 3, wobei ein dieser zugeordneter Lamellenträger 64 über seine Führungskulisse 65 durch Zusammenwirken mit einer hier nicht weiter dargestellten Aufstellvorrichtung, die beispielsweise durch einen zur Führungsschiene festen Lagerbock gebildet sein kann, ausgeschwenkt wird. Bis diese rückwärtige, ausgestellte Endlage der Lamelle 3 und des zugehörigen Führungsschlittens 62 erreicht ist, wird eine Steuerwippe 66 um ihre Achse 67 verschwenkt, wobei die über die Steuerwippe 66 getragene Lamelle 2 ausgeschwenkt wird und der dieser zugeordnete Lamellenträger 8 drucksteif gegen die Steuerwippe 66 abgestützt ist. Die diesbezüglichen Funktionen laufen entsprechend der anhand der Figuren 9 und 10 gegebenen Erläuterung ab. Ist für die Lamelle 3, wie in Figur 2 gezeigt, die Endstellung erreicht, so wird die drucksteife Abstützung des Lamellenträgers 8 gegenüber der Steuerwippe 66 dadurch aufgelöst, daß die entsprechenden Abstützungen über die Anlageflächen, die analog zu Figur 8 mit 42 bzw. 45 bezeichnet sind, außer Eingriff kommen.

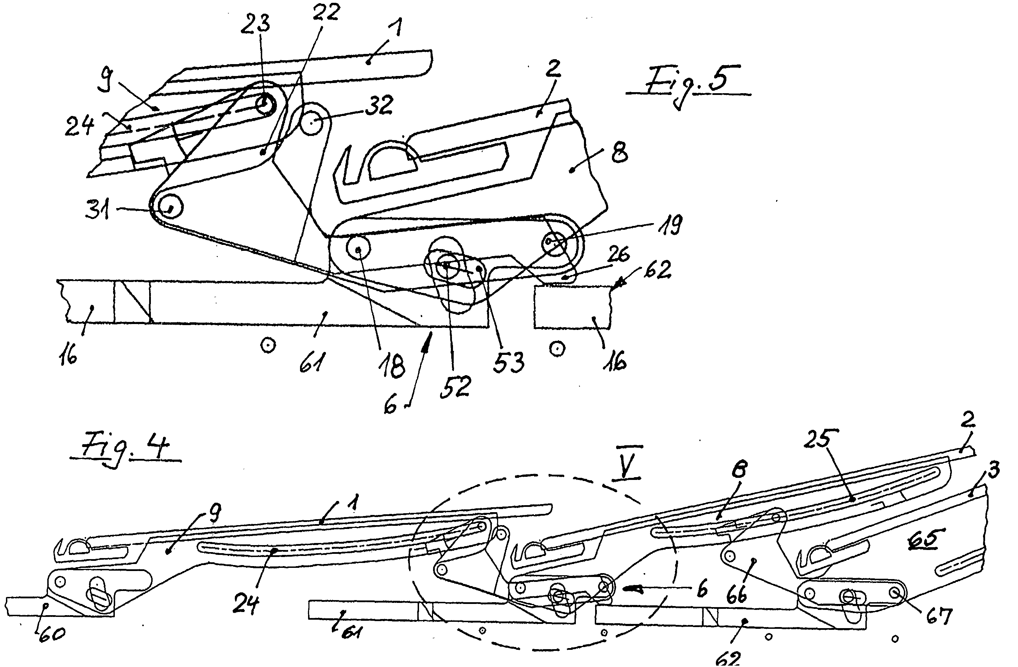

Für die dem Führungsschlitten 61 zugeordnete Führungsmechanik, die jener der Figuren 9 und 10 entspricht, ist noch eine Zwischenstellung gegeben, in der die Lamelle 1 zwar leicht ausgestellt ist, aber noch eine drucksteife Abstützung gegeben ist. Diese Situation ist in Figur 3 vergrößert dargestellt, wobei für die Mechanik in Figur 3 die gleichen Bezugszeichen Verwendung finden wie in Figuren 9 und 10, da sich die diesbezüglichen Mechaniken entsprechen.

Figur 4 zeigt eine weitere Zwischenstellung im Öffnungsvorgang des Daches, wobei für die Lamelle 3 und die dieser zugeordneten Führung keine Änderungen gegenüber dem in Figur 2 gezeigten Zustand eingetreten sind, da in Figur 2 bereits die Endlage dargestellt ist.

Für die Lamelle 2 ist in Figur 4 eine mittlere Verschiebestellung gezeigt, die ausgehend von der Auflösung der drucksteifen Abstützung des Lamellenträgers 8 gegenüber der Steuerwippe 66 in Figur 2 beim weiteren Öffnungsvorgang erreicht wird, wenn der voraufgegangene Führungsschlitten 61 nahezu den Führungsschlitten 62 erreicht hat und der Ausleger 16 des Führungsschlittens 62, der insoweit dem Führungsschlitten 11 in Figur 9 entspricht, in die Überlappung zum Führungsschlitten 61 einläuft, der dem Führungsschlitten 7 in Figur 9 entspricht. Der Schwenkhebel liegt dann in Überlappung zum Ausleger 16 und mit seinem Steg 32 in Überdeckung zum Lamellenträger 9 der Lamelle 1, der mit der Steuerwippe 22 über die entsprechenden Anschläge noch drucksteif abgestützt ist. Vergrößert zeigt dies Figur 5, wobei die in Figuren 9 und 10 verwendeten Bezugszeichen auch hier eingesetzt sind.

Figur 6 zeigt den voll ausgeschwenkten Zustand auch für die Lamelle 3, der durch weiteres Verschieben der Führungsschlitten 60 und 61 erreicht ist, wobei die Führungsschlitten 61 und 62 nunmehr überlappen.

Im Übergang von der Stellung gemäß Figuren 4 und 5 in die Stellung gemäß Figuren 6 und 7 wird verbunden mit dem weiteren Ausschwenken der Lamelle 2 die drucksteife Abstützung zwischen der Wippe 22 und dem Lamellenträger 9 letztlich aufgelöst, wobei hierfür die der Wippe 22 zugeordneten Anlageflächen 44 und 45 aus der Überdeckung zu den Anlageflächen 42 und 43 des Lamel-lenträgers 8 austreten. Gleichzeitig läuft der Steg 32 des Sperrelementes 27 aus der Überdeckung zur endseitigen Stirnseite 56 des Lamellenträgers 9 in eine Anlageposition zur Führungsbahn 33 des Lamellenträgers 8, wobei dieser Übergang erst möglich ist, wenn der zunächst noch auf dem Ausleger 16 des Führungsschlittens 62 abgestützte Sperrhebel 26 in die Eingriffsöffnung 17 abfällt, wie in Figur 9 gezeigt, also in Verschieberichtung eine Position erreicht ist, die zumindest nahezu der Endposition der Führungsschlitten 61 und 62 bei ausgestelltem Dach entspricht.

Funktional ist somit zunächst eine drucksteife Abstützung des Lamellenträgers 9 gegen die Führungswippe 22 gegeben, der zumindest in dem Übergangsbereich, in dem die Lamelle 2 ihre ausgefahrene Endstellung erreicht hat und damit die Verschiebung der Lamelle 1 gegenüber der Lamelle 2 zur Fortführung des Öffnungsvorganges freigegeben werden muß, eine Abstützung zwischen dem Lamellenträger 9 und dem Steg 32 des Sperrelementes 27 überlagert ist, so daß die Stützkräfte zwischen Lamelle 9 und Steuerwippe 22 beim Ausklinken der zugehörigen Anlageflächen 42 bis 45 zumindest teilweise über das Sperrelement 27 und dessen Steg 32 abgefangen werden, um zu hohe Belastungen der Anlageflächen 40 bis 45 insbesondere in deren Kantenbereichen, und damit einen frühzeitigen Verschleiß zu verhindern. Im Rahmen der Erfindung ist dies als eine zusätzliche Maßnahme zu sehen, die gegebenenfalls ergänzend zur Druckabstützung zwischen Lamellenträger und Steuerwippe zweckmäßig ist.

Ist die Verschiebung der Lamelle 1 freigegeben, so führt eine weiter auf den Tragschlitten 16 ausgeübte Druckkraft zum Einlaufen der Lamelle 1 in die Position gemäß Figur 8, in der das Dach voll geöffnet ist und die Führungsschlitten 61 und 62 gegeneinander verriegelt sind, während der Führungsschlitten 60 über den Antrieb entsprechend positioniert ist.

Der Schließvorgang des Daches läuft in entsprechender Weise ab, wobei ausgehend von der Darstellung gemäß Figur 8 zunächst der Führungsschlitten 60 in die Position gemäß Figur 6 gelangt mit der Folge, daß das Sperrelement 27 aufgrund der Schrägung der Stirnseite 50, aus seiner Sperrposition gedrängt wird. Alternati hierzu, bevorzugt aber nur unterstützend kann durch entsprechende Federbeaufschlagung des Sperrelementes, im Sinne einer Verschwenkung des Steges 32 in Richtung auf die Führungsbahn 33, das Sperrelement 27 entsprechend beaufschlagt sein, was hier jedoch nicht dargestellt ist.

Mit der Aufgabe der Verriegelung zwischen den Führungsschlitten 61 und 62 nach vollem Zurückfahren der Lamelle 1 in Schließrichtung wird der Führungsschlitten 61 über die Lamelle 1 mitgenommen und die Lamelle 2 in Richtung ihrer Schließstellung verfahren, wobei in hier nicht dargestellter Weise der Führungsschlitten 62 noch in seiner Endposition gehalten wird. Diese wird erst aufgegeben, wenn die Lamelle 2 die Endposition gemäß Figur 3 erreicht hat. Danach wird die Verriegelung des Führungsschlittens 62 gelöst, wobei dessen Verriegelung beispielsweise über ein dem Sperrelement 27 analoges Sperrelement erfolgen kann, das mit einem führungsschienenseitigen Endanschlag zusammenwirkt. Mit dem Zurückfahren und Einschwenken der Lamelle 3 in die Schließlage werden durch die Zwangskopplung über die Steuerwippen auch die davor liegenden Lamellen 1 und 2 in ihre jeweilige Schließlage sukzessive eingeschwenkt.

## Patentansprüche

1. Lamellendach für eine Dachöffnung eines Kraftfahrzeuges mit zumindest zwei Lamellen (1 bis 3), die dachfest fixierbar sind und über eine Führungsmechanik (6) schienengeführt zwischen einer Schließstellung, in der sie die Dachöffnung abdeckend in einem flächigen Verbund angeordnet sind, und einer die Dachöffnung freigebenden Öffnungsstellung, in der sie einander teilweise schichtartig übergreifend schräg ausgestellt sind, beweglich sind, wobei die Führungsmechanik (6) mit Lamellenträger (8 bzw. 9) und Führungsschlitten (11) für einen Lamellenträger eine Abstützung auf zwei aufeinander folgenden Führungsschlitten (7 und 11) vorsieht, von denen zumindest einer - bezogen auf die Schließrichtung des Lamellendaches - eine Schwenkachse (18 bzw. 19) für den der hinteren Lamelle (3) zugehörigen Lamellenträger und in Verschieberichtung achsversetzt hierzu eine Schwenkachse für eine Steuerwippe (22) trägt, die aus ihrer dem geschlossenen Dach zugeordneten Grundstellung in eine das Ausstellen der Lamellen steuernde Funktionsstellung umsteuerbar ist und mit dem vor dem Führungsschlitten liegenden Lamellenträger über eine längs desselben verlaufende Führungskulisse (24 bzw. 25) verbunden ist,
**dadurch gekennzeichnet,**
**daß** die Steuerwippe (22) zumindest in Öffnungsrichtung der über sie abgestützten Lamelle (1 bis 3) in ihrer Schwenkbewegung mit dem bezogen auf die Schließrichtung (F) rückwärtigen Lamellenträger (8) zwangsgekoppelt ist.

2. Lamellendach nach Anspruch 1,
**dadurch gekennzeichnet,**
**daß** die Steuerwippe (22) in Öffnungs- und Schließrichtung in ihrer Schwenkbewegung mit dem bezogen auf die Schließrichtung rückwärtigen Lamellenträger (8) zwangsgekoppelt ist.

3. Lamellendach nach Anspruch 1 oder 2,
**dadurch gekennzeichnet,**
**daß** die Zwangskopplung von Steuerwippe (22) und Lamellenträger (8) über den gesamten Schwenkbereich vorgesehen ist.

4. Lamellendach nach einem der vorhergehenden Ansprüche,
**dadurch gekennzeichnet,**
**daß** bei zueinander versetzten Schwenkachsen (18 und 19) von Lameilenträger (8) und Steuerwippe (22)die Zwangskopplung zwischen Steuerwippe (22) und Lamellenträger (8) in einem wechselseitigen Übergriffsbereich vorgesehen ist.

5. Lamellendach nach einem der vorhergehenden Ansprüche,
**dadurch gekennzeichnet,**
**daß** die Schwenkachse (18) für den der hinteren Lamelle (3) zugeordneten Lamellenträger (8) gegenüber der Schwenkachse (19) der Steuerwippe (22) in Richtung auf den der vorderen Lamelle (1) zugeordneten Lamellenträger (9) versetzt liegt.

6. Lamellendach nach Anspruch 4 oder 5,
**dadurch gekennzeichnet,**
**daß** die Steuerwippe (22) im Bereich zwischen den Schwenkachsen (18 und 19) in Höhenrichtung gegenüber dem der hinteren Lamelle (3) zugeordneten Lamellenträger (8) abgestützt ist.

7. Lamellendach nach einem der vorhergehenden Ansprüche,
**dadurch gekennzeichnet,**
**daß** zur Koppelung von Steuerwippe (22) und Lamellenträger (8) ein Tragzapfen (52) vorgesehen ist, der in der Steuerwippe (22) oder im Lamellenträger (8) in einer Langlochführung (53) läuft.

8. Lamellendach nach Anspruch 7,
**dadurch gekennzeichnet,**
**daß** die Erstreckungsrichtung der Langlochführung (53) etwa der Erstreckung einer Verbindungsgeraden zwischen den Schwenkachsen (18 und 19) entspricht.

9. Lamellendach nach einem der vorhergehenden Ansprüche,
**dadurch gekennzeichnet,**
**daß** die mit dem bezogen auf die Schließrichtung (F) vor dem Führungsschlitten (7) liegenden Lamellenträger (9) über dessen in Längsrichtung desselben verlaufende Führungskulisse (24) verbundene Steuerwippe (22) im Bereich ihrer um die Schließlage gegebenen Grundstellung gegen zumindest eine dem Lamellenträger (9) zugeordnete Abstützung in Verschieberichtung drucksteif abgestützt ist.

10. Lamellendach nach Anspruch 9,
**dadurch gekennzeichnet,**
**daß** die Abstützung beiderseits des Steges des Lamellenträgers (9) liegende Stützkörper (37 und 38) umfaßt.

11. Lamellendach nach Anspruch 10,
**dadurch gekennzeichnet,**
**daß** die Stützkörper (37 und 38) in Längsrichtung des Lamellenträgers (9) gegeneinander versetzt sind.

12. Lamellendach nach einem der Ansprüche 9 bis 11,
**dadurch gekennzeichnet,**
**daß** der Abstützung zwischen Steuerwippe (22) und Lamellenträger (9) eine Abstützung über ein Sperrelement (27) überlagerbar ist, das in Abhängigkeit von der Stellung des bezogen auf die Schließrichtung jeweils rückwärtigen Lamellenträgers (8) gesteuert ist.

13. Lamellendach nach Anspruch 12,
**dadurch gekennzeichnet,**
**daß** das Sperrelement (27) in Richtung auf seine Abstützlage gegenüber dem Lamellenträger (9) federbelastet ist.

14. Lamellendach nach einem der Ansprüche 12 oder 13,
**dadurch gekennzeichnet,**
**daß** das Sperrelement (27) einen Sperrhebel (26) umfaßt, der an der Steuerwippe (22) gelagert ist und bei Verschieben des über die Steuerwippe aufstellbaren Lamellenträgers (9) gegenüber der Steuerwippe (22) über eine dem Lamellenträger (9) zugeordnete Führungsbahn (33) geführt ist, derart, daß der Sperrhebel (27) über den die Steuerwippe (22) tragenden Führungsschlitten (7) in dessen der Offenstellung der über die Steuerwippe (22) aufgestellten Lamelle (9) entsprechenden Stellung relativ zu dem in Schließrichtung nächstfolgenden Führungsschlitten und/oder zu einer Führungsschiene festgelegt ist.

## Claims

1. Lamella roof for a roof opening of a motor vehicle, having at least two lamellae (1 to 3) which can be fixed to the roof and, guided on rails, can be moved, via a guide mechanism (6), between a closed position, in which they are arranged in a composite sheet-like arrangement covering the roof opening, and an open position, in which the roof opening is exposed and the lamellae are opened out obliquely such that they partially overlap one another in a layered manner, it being the case that the guide mechanism (6), with lamella carrier (8 or 9) and guide carriage (11), provides a support for a lamella carrier on two successive guide carriages (7 and 11), of which at least one - in relation to the closing direction of the lamella roof - bears a pivot pin (18 or 19) for the lamella carrier assigned to the rear lamella (3) and, axially offset in the displacement direction in relation to the same, a pivot pin for a control rocker (22) which can be changed over from its basic position, assigned to the closed roof, into a functional position, controlling the opening-out operation of the lamellae, and is connected to the lamella carrier located upstream of the guide carriage, via a guide slot (24 or 25) running along said lamella carrier, **characterized in that**, at least in the opening direction of the lamella (1 to 3) supported by it, the control rocker (22) is positively coupled, in terms of its pivoting movement, to the rear lamella carrier (8), as seen in the closing direction (F).

2. Lamella roof according to Claim 1, **Characterized in that**, in the opening and closing directions, the control rocker (22) is positively coupled, in terms of its pivoting movement, to the rear lamella carrier (8), as seen in the closing direction.

3. Lamella roof according to Claim 1 or 2, **characterized in that** the positive coupling between the control rocker (22) and lamella carrier (8) is provided over the entire pivoting range.

4. Lamella roof according to one of the preceding claims, **characterized in that**, with mutually offset pivot pins (18 and 19) of the lamella carrier (8) and control rocker (22), the positive coupling between the control rocker (22) and lamella carrier (8) is provided in a mutual-overlapping region.

5. Lamella roof according to one of the preceding claims, **characterized in that** the pivot pin (18) for the lamella carrier (8), which is assigned to the rear lamella (3), is offset, in relation to the pivot pin (19) of the control rocker (22), in the direction of the lamella carrier (9), which is assigned to the front lamella (1).

6. Lamella roof according to Claim 4 or 5, **characterized in that** the control rocker (22), in the region between the pivot pins (18 or 19), is supported in the vertical direction in relation to the lamella carrier (8), which is assigned to the rear lamella (3).

7. Lamella roof according to one of the preceding claims, **characterized in that** provided for the purpose of coupling the control rocker (22) and lamella carrier (8) is a carrying spindle (52) which runs in the control rocker (22) or in the lamella carrier (8) in a slot guide (53).

8. Lamella roof according to Claim 7, **characterized in that** the direction in which the slot guide (53) extends corresponds approximately to the extent of a straight line connecting the pivot pins (18 and 19).

9. Lamella roof, according to one of the preceding claims, **characterized in that** in the region of its basic position, which is provided around the closed position, the control rocker (22) connected to the lamella carrier (9), which is located upstream of the guide carriage (7) as seen in the closing direction (F), via the guide slot (24), running in the longitudinal direction of said lamella carrier, is supported with high compressive strength in the displacement direction against at least one support assigned to the lamella carrier (9).

10. Lamella roof according to Claim 9, **characterized in that** the support comprises supporting bodies (37 and 38) located on both sides of the crosspiece of the lamella carrier (9).

11. Lamella roof according to Claim 10, **characterized in that** the supporting bodies (37 and 38) are offset in relation to one another in the longitudinal direction of the lamella carrier (9).

12. Lamella roof according to one of Claims 9 to 11, **characterized in that** the support between the control rocker (22) and lamella carrier (9) may be combined with a support via a blocking element (27) which is controlled in dependence on the position of the rear lamella carrier (8), as seen in the closing direction in each case.

13. Lamella roof according to Claim 12, **characterized in that** the blocking element (27) is spring-loaded in the direction of its supporting position in relation to the lamella carrier (9).

14. Lamella roof according to either of Claims 12 and 13, **characterized in that** the blocking element (27) comprises a blocking lever (26) which is mounted on the control rocker (22) and is guided, upon displacement of the lamella carrier (9), which can be opened out via the control rocker, in relation to the control rocker (22) over a guide path (33), assigned to the lamella carrier (9) such that the blocking lever (27) is secured via the guide carriage (7), which bears the control rocker (22), in the position of the same which corresponds to the open position of the lamella (9), which is opened out via the control rocker (22), relative to the next-following guide carriage, as seen in the closing direction, and/or to a guide rail.

## Revendications

1. Toit à lamelles pour une ouverture de toit d'un véhicule automobile, qui comporte au moins deux lamelles (1 à 3) qui peuvent être fixées sur le toit et qui peuvent être déplacées par une mécanique de guidage (6) entre une position de fermeture dans laquelle elles recouvrent l'ouverture du toit de manière à affleurer à sa surface et une position d'ouverture qui libère l'ouverture du toit et dans laquelle elles sont déployées obliquement en se chevauchant mutuellement en forme de couches, la mécanique de guidage (6) qui comprend des supports de lamelle (8 et 9) et un coulisseau de guidage (11) pour un support de lamelle assurant un soutien sûr de coulisseaux de guidage successifs (7 et 11) parmi lesquels au moins l'un porte dans la direction de fermeture du toit à lamelles un axe de pivotement (18 ou 19) pour le support de lamelle associé à la lamelle arrière (3) et, avec un axe décalé dans la direction de déplacement, un axe de pivotement pour une bascule de commande (22) qui peut être transférée depuis sa position de base associée au toit fermé jusque dans une position fonctionnelle qui commande le déploiement des lamelles et est reliée au support de lamelle situé en avant du coulisseau de guidage par une coulisse de guidage (24 ou 25) qui s'étend le long de ce dernier,
**caractérisé en ce que**
le déplacement de pivotement de la bascule de commande (22) est couplé de manière forcée au support de lamelle (8) situé en arrière dans la direction de fermeture (F) par la lamelle (1 à 3) qu'il soutient.

2. Toit à lamelles selon la revendication 1, **caractérisé en ce que** le déplacement de pivotement dans la direction d'ouverture et dans la direction de fermeture de la bascule de commande (22) est couplé de manière forcée au support de lamelle (8) situé en arrière dans la direction de fermeture.

3. Toit à lamelles selon la revendication 1 ou 2, **caractérisé en ce que** le couplage forcé entre la bascule de commande (22) et le support de lamelle (8) est prévu sur toute la plage de pivotement.

4. Toit à lamelles selon l'une des revendications précédentes, **caractérisé en ce que** lorsque les axes de pivotement (18 et 19) du support de lamelle (8) et de la bascule de commande (22) sont décalés l'un par rapport à l'autre, l'accouplement obligatoire entre la bascule de commande (22) et le support de lamelle (8) est prévu dans une plage alternée de chevauchement.

5. Toit à lamelles selon l'une des revendications précédentes, **caractérisé en ce que** l'axe de pivotement (18) du support de lamelle (8) associé à la lamelle arrière (3) est décalé par rapport à l'axe de pivotement (19) de la bascule de commande (22) en direction du support de lamelle (9) associé à la lamelle avant (1).

6. Toit à lamelles selon la revendication 4 ou 5, **caractérisé en ce que** la bascule de commande (22) s'appuie dans le sens de la hauteur sur le support de lamelle (8) associé à la lamelle arrière (3) dans la région située entre les axes de pivotement (18 et 19).

7. Toit à lamelles selon l'une des revendications précédentes, **caractérisé en ce qu'**un tourillon de support (52) qui se déplace dans un trou oblong de guidage (53) est prévu dans la bascule de commande (22) ou dans le support de lamelle (8) pour l'accouplement de la bascule de commande (22) et du support de lamelle (8).

8. Toit à lamelles selon la revendication 7, **caractérisé en ce que** la direction d'extension du trou oblong de guidage (53) correspond sensiblement à l'extension d'une droite qui relie les axes de pivotement (18 et 19).

9. Toit à lamelles selon l'une des revendications précédentes, **caractérisé en ce que** dans la région de sa position de base fixée autour de sa position de fermeture, la bascule de commande. (22) reliée au support de lamelle (9) situé en avant du coulisseau de guidage (7) dans la direction de fermeture (F) par l'intermédiaire de sa coulisse de guidage (24) qui s'étend dans le sens de la longueur de ce support de lamelle s'appuie de manière rigide en poussée dans le sens du déplacement sur au moins un appui associé au support de lamelle (9).

10. Toit à lamelles selon la revendication 9, **caractérisé en ce que** l'appui comprend des corps de soutien (37 et 38) situés des deux côtés de la traverse du support de lamelle (9).

11. Toit à lamelles selon la revendication 10, **caractérisé en ce que** les corps de soutien (37 et 38) sont décalés l'un par rapport à l'autre dans le sens de la longueur du support de lamelle (9).

12. Toit à lamelles selon l'une des revendications 9 à 11, **caractérisé en ce que** le soutien entre la bascule de commande (22) et le support de lamelle (9) est un soutien qui peut être superposé à un élément de blocage (27) qui est commandé en fonction de la position du support de lamelle (8) situé en arrière dans la direction de fermeture.

13. Toit à lamelles selon la revendication 12, **caractérisé en ce que** l'élément de blocage (27) est sollicité par un ressort en direction de sa position d'appui contre le support de lamelle (9).

14. Toit à lamelles selon l'une des revendications 12 ou 13, **caractérisé en ce que** l'élément de blocage (27) comprend un levier de blocage (26) qui est monté sur la bascule de commande (22) et qui, lorsque le support de lamelle (9) qui peut être déployé par la bascule de guidage est déplacé par rapport à la bascule de commande (22) sur une piste de guidage (33) associée au support de lamelle (9), est guidé de telle sorte que le levier de blocage (27) est immobilisé par le coulisseau de guidage (7) qui porte la bascule de commande (22) dans sa position, qui correspond à la position d'ouverture de la lamelle (9) déployée par l'intermédiaire de la bascule de commande (22), par rapport au coulisseau de guidage suivant dans la direction de fermeture et/ou par rapport à un rail de guidage.
